# EUROPEAN PATENT SPECIFICATION

(11) **EP 3 858 896 B1**
(45) Date of publication and mention of the grant of the patent: **20.08.2025**
(21) Application number: 19867498.8
(22) Date of filing: 25.09.2019
(51) Int. Cl.: B29C 48/28, C08J 5/18, B29C 48/35, B29C 59/04, B32B 27/30, C03C 27/12

(54) **POLYVINYL ACETAL RESIN FILM AND MULTILAYER BODY CONTAINING SAME**
POLYVINYLACETALHARZFILM UND DIESEN ENTHALTENDER MEHRSCHICHTIGER KÖRPER
FILM DE RÉSINE D'ACÉTAL DE POLYVINYLE ET CORPS MULTICOUCHE LE CONTENANT

(30) Priority: 26.09.2018 JP 2018180673
(43) Date of publication of application: 04.08.2021
(73) Proprietor: Kuraray Europe GmbH, 65795 Hattersheim am Main (DE)
(72) Inventor: KOBAYASHI, Takuya, Kurashiki-shi, Okayama 713-8550 (JP); ISOUE, Koichiro, Kurashiki-shi, Okayama 713-8550 (JP); YASUDA, Hirotaka, Kurashiki-shi, Okayama 713-8550 (JP)
(74) Representative: Müller-Boré & Partner Patentanwälte PartG mbB
(86) International application number: PCT/JP2019/037630
(87) International publication number: WO 2020/067176

(56) References cited:
- EP-A1- 2 083 039
- EP-A1- 3 202 734
- EP-A1- 3 783 052
- EP-A1- 3 858 895
- EP-A1- 3 858 897
- WO-A1-2015/019445
- WO-A1-2015/019452
- WO-A1-2015/019452
- WO-A1-2018/181386
- JP-A- 2001 130 931
- JP-A- 2004 155 110
- JP-A- 2011 152 693
- JP-A- 2016 539 905
- JP-A- 2016 539 905
- JP-A- H06 210 729
- JP-A- H09 164 592
- JP-A- S6 161 835

## Description

### TECHNICAL FIELD

The present invention relates to a polyvinyl acetal resin film, and a laminate comprising the same.

### BACKGROUND ART

Films formed of a polyvinyl acetal resin are widely used as intermediate films of laminated glasses for various vehicles and buildings because of their excellent transparency, flexibility, shock absorption, adhesion with glass, and the like. Conventionally, in such polyvinyl acetal resin films, it is known to control the surface profile of each resin film for the purpose of improving the ease of handling and workability when, for example, laminating the resin film with a glass. For instance, intermediate films for laminated glasses, which are formed of a plasticized polyvinyl acetal resin layer or sheet provided with fine irregularities on both sides by embossing or the like, have been proposed (Patent Documents 1 and 2).

### PRIOR ART DOCUMENTS

### PATENT DOCUMENTS

[Patent Document 1] Japanese Laid-Open Patent Publication No. 2017-214276
[Patent Document 2] Japanese Laid-Open Patent Publication No. 2000-290046 [Patent Document 3] JP 2016 539905 A discloses laminated glass having embedded conductive structures using a polyvinyl acetal based interlayer sheet.

### SUMMARY OF THE INVENTION

### PROBLEMS TO BE SOLVED BY THE INVENTION

In recent years, for the purpose of imparting various functions to a glass of a building or a vehicle, for example, intermediate films for laminated glasses, on which functional layers such as a conductive layer, a UV/infrared reflection layer, and a color correction layer are arranged, have been developed. Resin films to be used as such intermediate films are required to not only have good ease of handling and workability for winding into the form of a roll and lamination with a transparent substrate such as a glass, but also be capable of allowing the functional layers to sufficiently exert desired functions.

However, in cases where a functional layer is arranged on such an intermediate film for laminated glass that has a relatively rough surface profile on both sides as described in Patent Documents 1 and 2, there is a problem that, during the process thereof or after lamination, deformation and breakage of the functional layer are likely to occur and the function of the functional layer is consequently reduced or impaired. Further, even with fine irregularities being formed on both sides of a resin film, similar surface profiles on both sides make it more likely that the irregularities on one side of the resin film are interdigitated with the irregularities on the other side when the resin film is wound into the form of a roll, and the adhesion between adjacent resin films is thereby enhanced; therefore, wrinkles are likely to be generated during the winding, and self-adhesion of the films may occur as well. Particularly, the generation of wrinkles in a film roll easily occurs in a thin resin film that contains only a small amount of a plasticizer or no plasticizer, and such a thin resin film does not necessarily have sufficiently satisfactory ease of handling and workability.

In view of the above, an object of the present invention is to provide a low-plastic or non-plastic polyvinyl acetal resin film which not only has excellent ease of handling and workability for winding into the form of a roll and lamination with a transparent substrate but also, when a functional layer is arranged thereon, hardly causes deformation or breakage of the functional layer and allows the functional layer to exhibit high functionality over a prolonged period.

### MEANS FOR SOLVING PROBLEMS

The present inventors intensively studied to solve the above-described problems, thereby completing the present invention. That is, the present invention provides the following preferred embodiments.

A polyvinyl acetal resin film, comprising a polyvinyl acetal resin material, according to claim 1. Further embodiments are described in the dependent claims.

### EFFECTS OF THE INVENTION

According to the present invention, a low-plastic or non-plastic polyvinyl acetal resin film which not only has excellent ease of handling and workability for winding into the form of a roll and lamination with a transparent substrate but also, when a functional layer is arranged thereon, hardly causes deformation or breakage of the functional layer and allows the functional layer to exhibit high functionality over a prolonged period, can be provided.

### BRIEF DESCRIPTION OF DRAWINGS

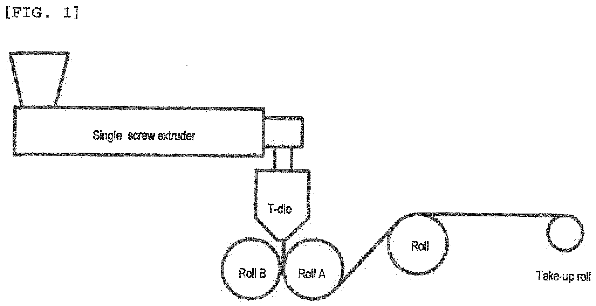

[FIG. 1] FIG. 1 is a schematic view of an apparatus used for the production of a polyvinyl acetal resin film.

### MODE FOR CARRYING OUT THE INVENTION

Embodiments of the present invention will now be described in detail; however, the present invention is not restricted thereto.

### <Polyvinyl Acetal Resin Film>

In the polyvinyl acetal resin film of the present invention, at least one surface has a relative diffuse reflectance of 3% or higher at a wavelength of 550 nm, and an absolute difference between the relative diffuse reflectance of one surface at a wavelength of 550 nm and that of the other surface at a wavelength of 550 nm is 0.5% or larger. A conventional polyvinyl acetal resin film used as an intermediate film for laminated glass generally has the same surface profile on both surfaces; however, in the polyvinyl acetal resin film of the present invention, one surface thereof and the other surface are allowed to have different surface profiles by controlling the relative diffuse reflectance values of these surfaces to be in the above-described relationship. As a result, when the elongated film is wound into the form of a roll after its formation, fine voids are generated between one surface and the other surface of adjacent resin films, and the generation of roll wrinkles caused by entrapment of air can be inhibited, so that a film roll having good outer appearance can be obtained. Further, by appropriately selecting the surface to which a functional layer, other layer, or a transparent substrate such as a glass is to be bonded, a high inhibitory effect can be obtained against deformation and breakage of the functional layer, foaming in the resulting laminated glass, and the like.

In the polyvinyl acetal resin film of the present invention, at least one surface has a relative diffuse reflectance of 3% or higher at a wavelength of 550 nm. When the resin film does not have such a surface having a relative diffuse reflectance of 3% or higher as described above, the resin film tends to have similar surface profiles between one surface and the other surface, and appropriate voids are thus unlikely to be generated when these surfaces are brought into contact with each other, which tends to enhance the adhesion between the surfaces that are in contact with each other. Therefore, when this resin film is wound into the form of a roll, wrinkles are likely to be generated due to entrapment of air, and self-adhesion is likely to occur, as a result of which the ease of handling and the workability of the film may be deteriorated. Moreover, while air bubbles are easily taken up when the resin film is laminated with a transparent substrate such as a glass, the removal of the air bubbles is difficult; therefore, foaming is likely to occur in the resulting laminated glass.

In the polyvinyl acetal resin film of the present invention, an absolute difference between the relative diffuse reflectance of one surface at a wavelength of 550 nm and that of the other surface at a wavelength of 550 nm is 0.5% or larger. When the absolute difference in relative diffuse reflectance between one surface and the other surface is smaller than 0.5%, the resin film has similar surface profiles between one surface and the other surface; therefore, when this resin film is wound into the form of a roll, strong adhesion is likely to occur between films in contact, making the generation of roll wrinkles and self-adhesion during storage more likely to occur. In the present invention, the absolute difference in relative diffuse reflectance between one surface and the other surface of the polyvinyl acetal resin film is preferably 0.8% or larger, more preferably 1% or larger. An upper limit of the absolute difference is not particularly restricted; however, it is usually 5% or smaller and may be, for example, 3% or smaller, preferably 2.5% or smaller.

In the present invention, it is preferred that the one surface of the polyvinyl acetal resin film have a relatively rough surface profile while the other surface have a relatively smooth surface profile. Such different surface profiles make the resin film unlikely entrap air when wound into the form of a roll, so that the generation of roll wrinkles can be inhibited. In addition, since strong adhesion between films is made unlikely to occur, self-adhesion during storage is inhibited, and the ease of handling and the workability of the resin film can thus be improved. Further, by laminating a functional layer on the surface having a relatively smooth surface profile, the adhesion between the resin film and the functional layer is enhanced, so that deformation and breakage of the functional layer over time can be inhibited. Moreover, by bonding a transparent substrate such as a glass on the other surface of the functional layer-laminated resin film which has a relatively rough surface profile, entrapment of air can be reduced, so that foaming in the resulting laminated glass can be inhibited.

In the polyvinyl acetal resin film of the present invention, the relative diffuse reflectance of one surface at a wavelength of 550 nm is 3% or higher, preferably 3.5% or higher, more preferably 4% or higher, still more preferably 4.5% or higher, yet still more preferably 5% or higher, but preferably 10% or lower, more preferably 9% or lower, still more preferably 8% or lower. Further, the relative diffuse reflectance of the other surface at a wavelength of 550 nm is preferably 2% or higher, more preferably 2.5% or higher, still more preferably 3% or higher, particularly preferably 3.5% or higher, but preferably 7% or lower, more preferably 6.5% or lower, still more preferably 6% or lower. In the polyvinyl acetal resin film, usually, a surface having a higher relative diffuse reflectance at a wavelength of 550 nm is the surface having a relatively rough surface profile, and a surface having a lower relative diffuse reflectance is the surface having a relatively smooth surface profile.

In the present invention, the relative diffuse reflectance of the polyvinyl acetal resin film at a wavelength of 550 nm can be adjusted by, for example, controlling the surface profile and the material of a roll used in the formation of the film from a polyvinyl acetal resin material by a melt-extrusion method, controlling the press pressure in melt-extrusion molding, and/or controlling the embossing conditions (e.g., resin film temperature and roll surface temperature).

In the present invention, the relative diffuse reflectance of the polyvinyl acetal resin film at a wavelength of 550 nm can be measured using, for example, a UV-visible/near-infrared spectrophotometer in which both sides of the film is irradiated with a light at an incidence angle of 0°. Specifically, the relative diffuse reflectance can be measured by the method described below in the section of Examples. It is noted here that specular reflection is not included in the relative diffuse reflectance of the resin film.

In the polyvinyl acetal resin film of the present invention, the average surface roughness (Rz) of one surface (usually, the surface having a relatively rough surface profile) is preferably 2 µm or higher, more preferably 2.5 µm or higher, still more preferably 3 µm or higher, particularly preferably 3.5 µm or higher, but preferably 7.5 µm or lower, more preferably 7 µm or lower, still more preferably 6.5 µm or lower. When the average surface roughness of one surface is in this range, appropriate voids are generated between adjacent films at the time of winding the resin film into the form of a roll, and entrapment of air can thus be inhibited; therefore, the generation of roll wrinkles is inhibited, and a film roll having a good outer appearance can be obtained. In addition, since strong adhesion between films is unlikely to occur, self-adhesion during storage is inhibited, so that the ease of handling and the workability of the resin film can be improved.

In the polyvinyl acetal resin film of the present invention, the average surface roughness (Rz) of the other surface (usually, the surface having a relatively smooth surface profile) is preferably less than 2 µm, more preferably 1.8 µm or less, still more preferably 1.5 µm or less. The lower the average surface roughness of the other surface, the more preferred it is. A lower limit value of the average surface roughness is not particularly restricted and may be 0 µm; however, it is usually 0.01 µm or higher, and may be 0.1 µm or higher. The surface having an average surface roughness in the above-described range is suitable as a surface to which a functional layer is bonded and, by bonding a functional layer to such a surface, deformation and breakage of the functional layer over time can be effectively inhibited.

In the present invention, the average surface roughness of the polyvinyl acetal resin film can be measured in accordance with JIS B0601-2001.

The thickness of the polyvinyl acetal resin film of the present invention is preferably 10 µm or greater, more preferably 30 µm or greater, still more preferably 40 µm or greater. With the thickness of the polyvinyl acetal resin film being not less than this value, shrinkage and deformation of the polyvinyl acetal resin film can be inhibited and, when a functional layer is laminated on the resin film, distortion and the like of the functional layer caused by shrinkage or deformation of the resin film are unlikely to occur. Meanwhile, the thickness of the polyvinyl acetal resin film of the present invention is preferably 350 µm or less, more preferably 330 µm or less, still more preferably 200 µm or less, particularly preferably 120 µm or less, most preferably less than 100 µm. With the thickness of the polyvinyl acetal resin film being not greater than this value, when a plasticized polyvinyl acetal resin layer is bonded adjacent to the polyvinyl acetal resin film of the present invention, the amount of a plasticizer migrating from the plasticized polyvinyl acetal resin layer to the polyvinyl acetal resin film of the present invention can be reduced. Consequently, the penetration resistance of the resulting laminate can be improved, so that, for example, a laminate that is suitable as a vehicle glass having an excellent effect of reducing the head impact on collision can be obtained.

The thickness of the polyvinyl acetal resin film can be measured by using, for example, a thickness gauge or a laser microscope.

### (Polyvinyl Acetal Resin)

The polyvinyl acetal resin film of the present invention comprises a polyvinyl acetal resin material comprising a polyvinyl acetal resin. The polyvinyl acetal resin is a resin produced by acetalization of a polyvinyl alcohol or a polyvinyl alcohol-based resin such as an ethylene-vinyl alcohol copolymer. It is noted here that the term "polyvinyl acetal resin material" used in the present invention encompasses both a material composed of a polyvinyl acetal resin and a material composed of a resin composition containing a polyvinyl acetal resin.

In the present invention, the polyvinyl acetal resin in the polyvinyl acetal resin film may comprise one polyvinyl acetal resin, or two or more polyvinyl acetal resins that are different in at least one of viscosity-average polymerization degree, acetalization degree, vinyl acetate unit content, vinyl alcohol unit content, ethylene unit content, molecular weight of aldehyde used for acetalization, and chain length. When the polyvinyl acetal resin film comprises two or more different polyvinyl acetal resins, from the viewpoint of the ease of melt molding and the viewpoint of preventing deformation of a functional layer, other layer or other film during the production of a laminated glass as well as misalignment and the like of a glass during the use of the laminated glass, it is preferred that the polyvinyl acetal resin be a mixture of at least two polyvinyl acetal resins having different viscosity-average polymerization degrees, or an acetalized product of a mixture of at least two polyvinyl alcohol-based resins having different viscosity-average polymerization degrees.

The acetalization degree of the polyvinyl acetal resin used in the present invention is preferably 40% by mole or higher, more preferably 45% by mole or higher, still more preferably 50% by mole or higher, yet still more preferably 60% by mole or higher, particularly preferably 68% by mole or higher, but preferably 86% by mole or lower, more preferably 84% by mole or lower, still more preferably 82% by mole or lower. Assuming that a unit comprising two carbon atoms of the main chain in a polyvinyl alcohol-based resin used as a raw material for the production of the polyvinyl acetal resin (e.g., a vinyl alcohol unit, a vinyl acetate unit, or an ethylene unit) is a single repeating unit, the acetalization degree is the amount of the above-described acetal-forming unit based on the single repeating unit. When the acetalization degree is in a range of from the above-described lower limit value to the above-described upper limit value, the resulting polyvinyl acetal resin film is likely to have a sufficient mechanical strength, and good compatibility is likely to be obtained between the polyvinyl acetal resin and a plasticizer, which is preferred. In cases where the polyvinyl acetal resin film contains two or more different polyvinyl acetal resins, it is preferred that the acetalization degree of at least one of the polyvinyl acetal resins be in a range of from the above-described lower limit value to the above-described upper limit value. Further, from the viewpoint of water resistance, the acetalization degree of the polyvinyl acetal resin is preferably 65% by mole or higher. The acetalization degree can be adjusted by controlling the amount of an aldehyde used in the acetalization reaction.

The vinyl acetate unit content of the polyvinyl acetal resin is preferably 0.1% by mole or higher, more preferably 0.3% by mole or higher, still more preferably 0.5% by mole or higher, but preferably 30% by mole or less, more preferably 20% by mole or less, and particularly preferably 0.5% to 3% by mole, or 5% to 8% by mole. Assuming that a unit comprising two carbon atoms of the main chain in a polyvinyl alcohol-based resin used as a raw material for the production of the polyvinyl acetal resin (e.g., a vinyl alcohol unit, a vinyl acetate unit, or an ethylene unit) is a single repeating unit, the vinyl acetate unit content is the amount of vinyl acetate units based on the single repeating unit. The vinyl acetate unit content can affect the polarity of the polyvinyl acetal resin, which may lead to a change in the plasticizer compatibility or the mechanical strength of the polyvinyl acetal resin film. When the vinyl acetate unit content is in a range of from the above-described lower limit value to the above-described upper limit value, for example, good bonding of the polyvinyl acetal resin film with a plasticized polyvinyl acetal resin layer optionally laminated adjacent thereto, as well as a reduction in optical distortion are likely to be achieved. In cases where the polyvinyl acetal resin film contains two or more different polyvinyl acetal resins, it is preferred that the vinyl acetate unit content of at least one of the polyvinyl acetal resins be in the above-described range. The vinyl acetate unit content can be adjusted by appropriately controlling the saponification degree of the polyvinyl alcohol-based resin used as a raw material.

The vinyl alcohol unit content of the polyvinyl acetal resin is preferably 9 to 36% by mole, more preferably 18% to 34% by mole, still more preferably 22% to 34% by mole, yet still more preferably 26% to 34% by mole, particularly preferably 26% to 31% by mole, particularly more preferably 26% to 30% by mole. Assuming that a unit comprising two carbon atoms of the main chain in a polyvinyl alcohol-based resin used as a raw material for the production of the polyvinyl acetal resin (e.g., a vinyl alcohol unit, a vinyl acetate unit, or an ethylene unit) is a single repeating unit, the vinyl alcohol unit content is the amount of vinyl alcohol units based on the single repeating unit. When the vinyl alcohol unit content is in the above-described range, the difference in refractive index between the polyvinyl acetal resin film and a plasticized polyvinyl acetal resin film optionally laminated adjacent thereto is small, so that a laminated glass with little optical unevenness is likely to be obtained. In order to additionally provide sound insulation performance, the vinyl alcohol unit content is preferably 9% to 29% by mole, more preferably 12% to 26% by mole, still more preferably 15% to 23% by mole, particularly preferably 16% to 20% by mole. In cases where the polyvinyl acetal resin film contains two or more different polyvinyl acetal resins, it is preferred that the vinyl alcohol unit content of at least one of the polyvinyl acetal resins be in the above-described range. The vinyl alcohol unit content can be adjusted in the above-described range by controlling the amount of an aldehyde used in the acetalization reaction.

The polyvinyl acetal resin is usually constituted by an acetal-forming unit, a vinyl alcohol unit and a vinyl acetate unit, and the amount of each unit is determined by, for example, JIS K6728 "Testing Methods for Polyvinyl Butyral" or nuclear magnetic resonance spectroscopy (NMR).

The viscosity of a toluene/ethanol (1:1, mass ratio) solution containing 10%-by-mass of the polyvinyl acetal resin contained in the polyvinyl acetal resin material constituting the polyvinyl acetal resin film of the present invention, which is measured at 20°C and 30 rpm using a Brookfield-type (B-type) viscometer, is preferably 100 mPa·s or higher, more preferably 200 mPa·s or higher, still more preferably 240 mPa·s or higher, particularly preferably 265 mPa·s or higher. With the viscosity of the polyvinyl acetal resin being not lower than this lower limit value, when a laminated glass is produced by laminating a functional layer, deformation and breakage of the functional layer can be inhibited, and a phenomenon of glass misalignment caused by heat can be effectively inhibited in the resulting laminated glass. From the viewpoint of obtaining good film-forming property, an upper limit value of the viscosity is usually 1,000 mPa·s or lower, preferably 800 mPa·s or lower, more preferably 500 mPa·s or lower, still more preferably 450 mPa·s or lower.

The above-described viscosity can be adjusted by using a polyvinyl acetal resin, which is produced by using a polyvinyl alcohol-based resin having a high viscosity-average polymerization degree as a raw material or a part of the raw material, singly or in combination. When the polyvinyl acetal resin used for forming the polyvinyl acetal resin film is a mixture of plural resins, the above-described viscosity is the viscosity of such a mixture.

The peak-top molecular weight of the polyvinyl acetal resin contained in the polyvinyl acetal resin material is preferably 115,000 to 200,000, more preferably 120,000 to 160,000, particularly preferably 130,000 to 150,000. When the peak-top molecular weight of the polyvinyl acetal resin is in this range, preferred film-forming property and film physical properties (e.g., lamination suitability, creep resistance, and breaking strength) are likely to be obtained. The peak-top molecular weight can be adjusted by using a polyvinyl acetal resin, which is produced by using a polyvinyl alcohol-based resin having a high viscosity-average polymerization degree as a raw material or a part of the raw material, singly or in combination.

The molecular weight distribution, i.e. a ratio (Mw/Mn) of the weight-average molecular weight (Mw) and the number-average molecular weight (Mn), of the polyvinyl acetal resin contained in the polyvinyl acetal resin material is preferably 2.7 or higher, more preferably 2.8 or higher, particularly preferably 2.9 or higher. When the molecular weight distribution of the polyvinyl acetal resin is not lower than this lower limit value, both good film-forming property and preferred film physical properties (e.g., lamination suitability, creep resistance, and breaking strength) are likely to be obtained at the same time. The molecular weight distribution can be adjusted by acetalizing a mixture of polyvinyl alcohol-based resins having different viscosity-average polymerization degrees, or by mixing acetalizated products of polyvinyl alcohol-based resins having different viscosity-average polymerization degrees. An upper limit value of the molecular weight distribution is not particularly restricted; however, from the viewpoint of the ease of film formation, it is usually 10 or lower, preferably 5 or lower.

When the polyvinyl acetal resin material comprises two or more different polyvinyl acetal resins, it is preferred that the peak-top molecular weight and the molecular weight distribution of at least one of the polyvinyl acetal resins be in the above-described respective ranges.

The peak-top molecular weight and the molecular weight distribution can be determined by, for example, gel permeation chromatography (GPC) using a polystyrene of known molecular weight as a standard.

A polyvinyl acetal resin used in the present invention can be produced by a conventionally known method, typically by acetalization of a polyvinyl alcohol-based resin (e.g., a polyvinyl alcohol resin or an ethylene-vinyl alcohol copolymer) with an aldehyde. The method is not restricted; however, specifically, for example, a 3 to 30%-by-mass aqueous solution of a polyvinyl alcohol or an ethylene-vinyl alcohol copolymer is maintained in a temperature range of 80 to 100°C and then slowly cooled over a period of 10 to 60 minutes and, once the temperature is lowered to -10 to 30°C, an aldehyde and an acid catalyst are added, and an acetalization reaction is allowed to proceed for 30 to 300 minutes while maintaining the temperature constant. Next, the resulting reaction solution is heated to a temperature of 20 to 80°C over a period of 30 to 200 minutes, maintained for 30 to 300 minutes, and subsequently filtered as required, after which the reaction solution is neutralized with an addition of a neutralizer such as an alkali, and the thus formed resin is filtered, washed with water, and then dried, whereby a polyvinyl acetal resin that may be used in the present invention can be produced.

The acid catalyst used in the acetalization reaction is not particularly restricted, and either an organic acid or an inorganic acid can be used. Examples of the acid catalyst include acetic acid, *p*-toluenesulfonic acid, nitric acid, sulfuric acid, and hydrochloric acid. Among them, from the viewpoint of the acid strength and the ease of removal by washing, hydrochloric acid, sulfuric acid, and nitric acid can be preferably used.

From the viewpoint of the ease of obtaining a polyvinyl acetal resin having a preferred breaking energy, the aldehyde or a keto compound used for the production of the polyvinyl acetal resin is preferably a linear, branched, or cyclic compound having 2 to 10 carbon atoms, more preferably a linear or branched compound. Such a compound gives an appropriate linear or branched acetal group. The polyvinyl acetal resin used in the present invention may be an acetalized product obtained by acetalizing a polyvinyl alcohol or an ethylene-vinyl alcohol copolymer with a mixture of plural aldehydes or keto compounds.

The polyvinyl acetal resin used in the present invention is preferably a polyvinyl acetal resin that is produced by a reaction between at least one polyvinyl alcohol-based resin and one or more aliphatic unbranched aldehydes having 2 to 10 carbon atoms. As such an aldehyde, from the viewpoint of the ease of obtaining a polyvinyl acetal resin having a preferred breaking energy, *n*-butylaldehyde is preferred. The content of *n-*butylaldehyde in the aldehydes used for acetalization is preferably not less than 50% by mass, more preferably not less than 80% by mass, still more preferably not less than 95% by mass, particularly preferably not less than 99% by mass, and may be 100% by mass. In a preferred embodiment of the present invention, the polyvinyl acetal resin is a polyvinyl butyral resin.

The polyvinyl alcohol-based resin used for the production of the polyvinyl acetal resin may be a single polyvinyl alcohol-based resin, or a mixture of polyvinyl alcohol-based resins having different viscosity-average polymerization degrees, hydrolysis degrees, or the like.

The viscosity-average polymerization degree of the polyvinyl alcohol-based resin used as a raw material of the polyvinyl acetal resin is preferably 100 or higher, more preferably 300 or higher, still more preferably 400 or higher, yet still more preferably 600 or higher, particularly preferably 700 or higher, particularly more preferably 750 or higher. When the viscosity-average polymerization degree of the polyvinyl alcohol-based resin is not lower than this lower limit value, deformation and breakage of a functional layer during the production of a laminated glass are likely to be inhibited, and a phenomenon of glass misalignment caused by heat can be inhibited in the resulting laminated glass. Meanwhile, the viscosity-average polymerization degree of the polyvinyl alcohol-based resin is preferably 5,000 or lower, more preferably 3,000 or lower, still more preferably 2,500 or lower, particularly preferably 2,300 or lower, particularly more preferably 2,000 or lower. When the viscosity-average polymerization degree of the polyvinyl alcohol-based resin is not higher than this upper limit value, good film-forming property is likely to be obtained.

It is noted here that a preferred value of the viscosity-average polymerization degree of the polyvinyl acetal resin is the same as that of the viscosity-average polymerization degree described above for the polyvinyl alcohol-based resin. When polyvinyl acetal resin film comprises two or more different polyvinyl acetal resins, it is preferred that the viscosity-average polymerization degree of at least one of the polyvinyl acetal resins be in a range of from the above-described lower limit value to the above-described upper limit value. The viscosity-average polymerization degree of the polyvinyl alcohol-based resin can be determined in accordance with JIS K6726 "Testing Methods for Polyvinyl Alcohol".

From the viewpoint of the ease of obtaining good film-forming property, the polyvinyl acetal resin film preferably comprises an uncrosslinked polyvinyl acetal. The polyvinyl acetal resin film may also comprise a crosslinked polyvinyl acetal. A method for crosslinking a polyvinyl acetal is described in, for example, EP 1527107 B1 and WO 2004/063231 A1 (thermal self-crosslinking of carboxyl group-containing polyvinyl acetal), EP 1606325 A1 (polyvinyl acetalcrosslinked with polyaldehyde), and WO 2003/020776 A1 (polyvinyl acetal crosslinked with glyoxylic acid). It is also useful to control the amount of intermolecular acetal bonds to be formed and/or the blocking degree of a residual hydroxyl group by adjusting the acetalization reaction conditions as appropriate.

### (Plasticizer)

In the present invention, the amount of a plasticizer in the polyvinyl acetal resin film is 0 to 20% by mass based on a total mass of the polyvinyl acetal resin film. With the plasticizer amount being greater than 20% by mass, good film-forming property cannot be obtained and, when a laminated glass is produced by laminating a functional layer, such a plasticizer amount tends to make deformation and breakage of the functional layer more likely to occur; therefore, good functionality cannot be exerted. By reducing the plasticizer amount or not incorporating any plasticizer, the polyvinyl acetal resin film tends to be provided with excellent film-forming property and ease of handling and thus can be a resin film suitable for laminating a functional layer thereon; however, at the same time, the generation of roll wrinkles is made more likely to occur in a low-plastic or non-plastic polyvinyl acetal resin film. In the polyvinyl acetal resin film of the present invention, one surface of the resin film is provided with a different surface profile from that of the other surface by controlling the relative diffuse reflectance values of both surfaces of the resin film to satisfy the above-described specific relationship. As a result, even in a resin film which by nature easily forms roll wrinkles due to a small plasticizer amount, appropriate voids are generated between adjacent resin films and the generation of roll wrinkles can thus be effectively inhibited. In addition, by laminating a functional layer on the relatively smooth surface, a laminated glass in which the functional layer is hardly deformed or broken over time can be obtained.

The plasticizer amount is preferably 0 to 19% by mass, more preferably 0 to 15% by mass, still more preferably 0 to 10% by mass, particularly preferably 0 to 5% by mass, based on a total mass of the polyvinyl acetal resin film. With the plasticizer amount in the polyvinyl acetal resin film being in this range, the polyvinyl acetal resin film tends to have excellent film-forming property and ease of handling and, when a laminated glass is produced using the polyvinyl acetal resin film, deformation and breakage of a functional layer is inhibited, as a result of which good functionality can be obtained.

When a plasticizer is incorporated into the polyvinyl acetal resin film, one or more compounds of the following groups are preferably used as the plasticizer.
- Esters of polyvalent aliphatic or aromatic acids, examples of which include: dialkyl adipates (e.g., dihexyl adipate, di-2-ethylbutyl adipate, dioctyl adipate, di-2-ethylhexyl adipate, hexylcyclohexyl adipate, diheptyl adipate, dinonyl adipate, diisononyl adipate, heptylnonyl adipate); esters of adipic acid and an alcohol or an ether compound-containing alcohol [e.g., di(butoxyethyl)adipate and di(butoxyethoxyethyl)adipate]; dialkyl sebacates (e.g., dibutyl sebacate); esters of sebacic acid and an alicyclic or ether compound-containing alcohol; phthalic acid esters (e.g., butylbenzyl phthalate and bis-2-butoxyethyl phthalate); and esters of an alicyclic polycarboxylic acid and an aliphatic alcohol (e.g., diisononyl 1,2-cyclohexane dicarboxylate);
- Esters or ethers of polyvalent aliphatic or aromatic alcohols or oligoether glycols having at least one aliphatic or aromatic substituent, examples of which include: esters of glycerin, diglycol, triglycol, tetraglycol or the like and a linear or branched, aliphatic or alicyclic carboxylic acid, specifically diethylene glycol-bis-(2-ethylhexanoate), triethylene glycol-bis-(2-ethylhexanoate) (hereinafter, may be referred to as "3GO"), triethylene glycol-bis-(2-ethylbutanoate), tetraethylene glycol-bis-n-heptanoate, triethylene glycol-bis-n-heptanoate, triethylene glycol-bis-n-hexanoate, tetraethylene glycol dimethyl ether, and dipropylene glycol dibenzoate;
- Phosphoric acid esters of aliphatic or aromatic alcohols, examples of which include tris(2-ethylhexyl) phosphate, triethyl phosphate, diphenyl-2-ethylhexyl phosphate, and tricresyl phosphate; and
- Esters of citric acid, succinic acid, and/or fumaric acid.

Further, as the plasticizer, a polyester or oligoester formed from a polyhydric alcohol and a polycarboxylic acid, a terminal esterified product or etherified product thereof, a polyester or oligoester formed from lactone or hydroxycarboxylic acid, or a terminal esterified product or etherified product thereof may be used.

When the polyvinyl acetal resin film comprises a plasticizer, from the viewpoint of preventing the problems (e.g., changes in physical properties over time) that are associated with migration of the plasticizer between the polyvinyl acetal resin film and a plasticized polyvinyl acetal resin layer optionally laminated thereon, it is preferred to use the same plasticizer as the one contained in the plasticized polyvinyl acetal resin layer to be laminated, or a plasticizer that does not impair the physical properties (e.g., heat resistance, light resistance, transparency, and plasticization efficiency) of the plasticized polyvinyl acetal resin layer. From this standpoint, the polyvinyl acetal resin film contains, as the plasticizer, preferably 3GO, triethylene glycol-bis-(2-ethylbutanoate), tetraethylene glycol-bis-(2-ethylhexanoate), or tetraethylene glycol bis-heptanoate, particularly preferably triethylene glycol-bis-(2-ethylhexanoate).

The polyvinyl acetal resin film of the present invention may further comprise other additives. Examples of such additives include water, a UV absorber, an antioxidant, an adhesion modifier, a brightener or fluorescent brightener, a stabilizer, a dye, a processing aid, an impact resistance improving agent, a fluidity improving agent, a cross-linking agent, a pigment, a light-emitting material, a refractive index modifier, a heat insulating material, organic or inorganic nanoparticles, a calcined silicate, and a surfactant.

In one embodiment, when a conductive layer is laminated as a functional group, in order to inhibit the corrosion of the resulting conductive structure, the polyvinyl acetal resin film preferably contains a corrosion inhibitor. In this case, the amount of the corrosion inhibitor contained in the polyvinyl acetal resin film is preferably 0.005 to 5% by mass based on the mass of the resin material constituting the polyvinyl acetal resin film. The corrosion inhibitor is, for example, a substituted or unsubstituted benzotriazole.

The amount of the polyvinyl acetal resin in the polyvinyl acetal resin film of the present invention is preferably not less than 75% by mass, more preferably not less than 80% by mass, still more preferably not less than 85% by mass, yet still more preferably not less than 90% by mass, particularly preferably not less than 95% by mass, based on a total mass of the polyvinyl acetal resin film. When the amount of the polyvinyl acetal resin in the polyvinyl acetal resin film is in this range, a polyvinyl acetal resin film having excellent transparency, film-forming property, and ease of handling is likely to be obtained and, in the production of a laminated glass using the polyvinyl acetal resin film, deformation and breakage of a functional layer are likely to be inhibited, as a result of which good functionality is likely to be obtained.

The polyvinyl acetal resin film of the present invention may have a layer separation structure constituted by multiple components; however, in the layer separation structure, island components have an average particle size of preferably smaller than 100 nm, more preferably smaller than 80 nm, and it is particularly preferred that the polyvinyl acetal resin film does not show a sea-island layer separation structure. By not showing a sea-island layer separation structure or by having a sufficiently fine particle size, the polyvinyl acetal resin film can be ensured to have such transparency that allows the use thereof for a vehicle windshield and the like.

### (Method of Producing Polyvinyl Acetal Resin Film)

A method of producing the polyvinyl acetal resin film is not particularly restricted. The polyvinyl acetal resin film can be produced by blending the above-described polyvinyl acetal resin with, depending on the case, a prescribed amount of a plasticizer and other additives as necessary, homogeneously kneading the resultant, and then molding the kneaded product into a film shape by a known film forming method, such as an extrusion method, a calendering method, a press method, a casting method, or an inflation method.

Among known film forming methods, a method of producing the film using an extruder is particularly preferably employed. The resin temperature during extrusion is preferably 150 to 250°C, more preferably 170 to 230°C. An excessively high resin temperature causes degradation of the polyvinyl acetal resin, and this leads to a high content of a volatile substance. Meanwhile, an excessively low resin temperature also leads to a high content of a volatile substance. For efficient removal of a volatile substance, it is preferred to remove the volatile substance by vacuuming through a vent opening of the extruder.

In melt extrusion, by using cooling rolls having different surface profiles and materials, the relative diffuse reflectance values of the resulting resin film surfaces at a wavelength of 550 nm can be controlled in specific ranges. For example, for the formation of a smooth surface, a smooth (mirror-finished) cooling roll typified by a mirror-finished metal cooling roll such as a metal elastic roll or a metal hard roll can be used. For the formation of a rough surface, an embossing roll made of a metal, a hard rubber or the like, which corresponds to a desired surface profile (surface roughness), can be used. In order to allow each surface of the resin film to have a relative diffuse reflectance at a wavelength of 550 nm in the above-described specific range, it is preferred to select these rolls as appropriate for controlling the surface profiles of both surfaces of the resin film and to form the film using a resin material extruded from a T-die, and it is also preferred to use a mirror-finished roll as one of a pair of rolls for nipping the extruded resin material and to use an embossing roll suitable for forming irregularities as the other roll. By this method, a resin film having a smooth surface and a relatively rough surface can be obtained.

From the viewpoint of making it easier to control the surface profiles of the respective surfaces of the polyvinyl acetal resin film and to attain the above-described specific relative diffuse reflectance values, it is preferred to use an elastic roll as least one of a pair of rolls for the film formation, and it is more preferred to use a metal elastic roll. Further, from the same viewpoint, the temperature of the polyvinyl acetal resin film at the time of being peeled off from the cooling rolls is lower than the glass transition temperature of the polyvinyl acetal resin contained in the polyvinyl acetal resin film by preferably not less than 5°C, more preferably not less than 10°C, still more preferably not less than 20°C, particularly preferably not less than 40°C. When the temperature of the polyvinyl acetal resin film at the time of being peeled off from the cooling rolls and the glass transition temperature satisfy the above-described relationship, surface roughness due to the tackiness of the polyvinyl acetal resin film at the time of being peeled off from the cooling rolls, or thickness unevenness due to shrinkage and the like of the film, is likely to be reduced. When the polyvinyl acetal resin contained in the polyvinyl acetal resin film comprises two or more polyvinyl acetal resins, it is preferred that the glass transition temperature of at least one of the polyvinyl acetal resins and the temperature of the polyvinyl acetal resin film at the time of being peeled off from the cooling rolls satisfy the above-described relationship.

In the present invention, the relative diffuse reflectance of each surface of the polyvinyl acetal resin film at a wavelength of 550 nm is affected by the surface profile of the resin film; however, since the value thereof also varies depending on the pitch, sharpness and the like of the surface irregularities, the surface roughness (Rz) and the diffuse reflectance do not necessarily have a certain correlation. Therefore, in the polyvinyl acetal resin film of the present invention, it is important to control the relative diffuse reflectance of each surface in the above-described specific range.

### <Functional Layer-Equipped Polyvinyl Acetal Resin Film>

The polyvinyl acetal resin film of the present invention exhibits an excellent effect of inhibiting deformation and breakage over time when other layer such as a functional layer is laminated thereon; therefore, the polyvinyl acetal resin film of the present invention is suitable as a resin film on which a functional layer is to be laminated. Accordingly, the present invention also relates to a functional layer-equipped polyvinyl acetal resin film which comprises a functional layer on at least one surface of the polyvinyl acetal resin film of the present invention. In the present invention, the term "functional layer" means a layer that imparts a specific function to a laminate such as a laminated glass. The functional layer may be provided singly, or in a plural number. When the polyvinyl acetal resin film has plural functional layers, the functional layers may be of the same type, or different types.

When a functional layer is arranged, it is preferably arranged on a surface of the polyvinyl acetal resin film of the present invention which has a lower relative diffuse reflectance at a wavelength of 550 nm. By arranging a functional layer on the surface having a lower relative diffuse reflectance, the adhesion between the resin film and the functional layer is improved, and deformation and breakage of the functional layer over time are made unlikely to occur. When the functional layer-equipped polyvinyl acetal resin film has plural functional layers, the surface on which each functional layer is to be laminated may be selected as appropriate in accordance with the type and the purpose of the functional layer; however, in the production of a laminate (laminated glass) described below, foaming in the resulting laminated glass or the like can be effectively inhibited by bonding a surface of the polyvinyl acetal resin film of the present invention, which has a higher relative reflectance, with a transparent substrate; therefore, it is preferred that the plural functional layers be all arranged on the surface having a lower relative diffuse reflectance.

On a surface of the polyvinyl acetal resin film on which a functional layer is arranged, the polyvinyl acetal resin film may have the functional layer on the entirety of this surface, or may have the functional layer on a part of the surface. When a laminate is produced by laminating a plasticized polyvinyl acetal resin layer on the polyvinyl acetal resin film as described below, it is preferred that the polyvinyl acetal resin film have the functional layer on a part of its surface such that a plasticizer contained in the plasticized polyvinyl acetal resin layer can migrate to the polyvinyl acetal resin film. However, this does not apply to a case where the functional layer does not inhibit the migration of the plasticizer from the plasticized polyvinyl acetal resin layer to the polyvinyl acetal resin film.

The functional layer is preferably at least one selected from the group consisting of a conductive layer, a specific-wavelength electromagnetic wave reflection layer such as an infrared reflection layer or a UV reflection layer, a color correction layer, an infrared absorption layer, a UV absorption layer, a fluorescent/light-emitting layer, a sound insulation layer, an electrochromic layer, a photochromic layer, a thermochromic layer, a design layer, and a high-elastic-modulus layer.

The polyvinyl acetal resin film of the present invention is configured such that deformation and the like thereof hardly occurs because of a relatively low plasticizer content, and both surfaces of the resin film have the above-described respective specific relative diffuse reflectance values; therefore, by appropriately selecting the surface on which the functional layer is to be laminated, a high effect of inhibiting deformation and breakage of the functional layer over time can be obtained. Accordingly, the polyvinyl acetal resin film of the present invention is particularly suitable for the production of a resin film comprising a conductive layer, where deformation and breakage are likely to occur in a conventional polyvinyl acetal resin film. Therefore, in one mode of the present invention, the functional layer is preferably a conductive layer.

From the viewpoint of, for example, electrical resistance and ease of production, the thickness of the conductive layer is preferably 1 to 30 µm, more preferably 2 to 15 µm, particularly preferably 3 to 10 µm. The thickness of the conductive layer is measured using, for example, a thickness gauge or a laser microscope.

From the viewpoint of, for example, electrical resistance, heat generation performance, electromagnetic wave absorption, and optical properties, the conductive layer preferably has a linear, grid-like or mesh-like shape. Examples of the linear shape include a straight-line shape, an undulating shape, and a zigzag shape. A single conductive layer may have a single shape, or a combination of plural shapes.

In one embodiment in which, for example, a conductive layer is formed by a printing method and a laminate (laminated glass) is partially heated or used as a sensor or an antenna in a domain where it is not important to ensure forward visibility, from the viewpoint of ensuring a sufficient amount of heat generation or sufficient functionality as a sensor or an antenna as well as from the viewpoint of the ease of production, the conductive layer is preferably formed of plural linear conductive materials having a line width of 0.001 to 5 mm. In other words, the linear conductive materials (wiring) constituting the above-described linear, grid-like or mesh-like shape preferably have a line width of 0.001 to 5 mm. The line width is more preferably 0.01 to 2 mm, particularly preferably 0.03 to 1 mm.

In another embodiment in which, for example, a laminate is entirely heated, from the viewpoint of ensuring both a sufficient amount of heat generation and good forward visibility, the conductive layer is preferably formed of plural linear conductive materials having a line width of 1 to 30 µm. In other words, the linear conductive materials constituting the above-described linear, grid-like or mesh-like shape preferably have a line width of 1 to 30 µm. The line width is more preferably 2 to 15 µm, particularly preferably 3 to 12 µm.

From the viewpoint of the ease of ensuring electrical resistance or heat generation and the ease of production, the conductive materials constituting the conductive layer preferably comprise silver or copper, more preferably consist of silver or copper. Further, from the economic viewpoint, the conductive materials more preferably comprise copper, still more preferably consist of copper.

In an embodiment in which the conductive layer is based on a metal foil, it is preferred that at least one surface of the conductive layer be treated to have a low reflectance, and it is more preferred that both surfaces of the conductive layer be treated to have a low reflectance. In the present invention, the expression "treated to have a low reflectance" means that the conductive layer is treated such that it has a visible light reflectance of 30% or lower as measured in accordance with JIS R3106. From the viewpoint of forward visibility, it is more preferred that the conductive layer be treated such that it has a visible light reflectance of 10% or lower. When the visible light reflectance is not higher than the above-described upper limit value, a desired visible light reflectance is likely to be obtained in the production of a laminate using the polyvinyl acetal resin film having the conductive layer and, for example, when the resulting laminate is used as a laminated glass of a vehicle, excellent forward visibility tends to be obtained.

Examples of a method for such a low-reflectance treatment include blackening (darkening), browning, and plating. From the viewpoint of process passability, the low-reflectance treatment is preferably a blackening treatment. Accordingly, from the viewpoint of attaining good forward visibility, it is particularly preferred that one or both surfaces, or the entire surface of the conductive layer be blackened such that the conductive layer has a visible light reflectance of 10% or lower. Specifically, the blackening treatment is performed using an alkali-based blackening solution or the like.

### <Method of Producing Functional Layer-Equipped Polyvinyl Acetal Resin Film>

A method of producing the functional layer-equipped polyvinyl acetal resin film is not particularly restricted, and the functional layer-equipped polyvinyl acetal resin film can be produced by, for example, a method that comprises coating, printing, or laminating a material constituting the functional layer on at least one surface of the polyvinyl acetal resin film on which the functional layer is to be arranged.

A method of coating, printing, or laminating the material constituting the functional layer is not particularly restricted.

Examples of a coating method include: a method of coating the functional layer with a melt of a resin material constituting the polyvinyl acetal resin film (e.g., a method of melt-extruding the resin material onto the functional layer, or a method of applying the resin material onto the functional layer by knife coating or the like); a method of applying the functional layer to the polyvinyl acetal resin film by vapor deposition, sputtering, or electrodeposition; a method of, when the functional layer is formed of a resin material, extruding the resin material constituting the polyvinyl acetal resin film simultaneously with the resin material constituting the functional layer; and a method of dipping the polyvinyl acetal resin film in a solution of a resin material constituting the functional layer.

Examples of a printing method include screen printing, flexographic printing, and gravure printing. In the printing method, an ink which is dried or cured by heat or light is used before laminating the polyvinyl acetal resin film having the functional layer.

Examples of a laminating (pasting) method include: a method of superimposing and thermocompression-bonding the functional layer and the polyvinyl acetal resin film; a method of bonding the functional layer and the polyvinyl acetal resin film by coating either or both thereof with a solvent or a solution of a resin material (composition) that contains a resin constituting the polyvinyl acetal resin film and a solvent, or by injecting the solvent or the solution between the functional layer and the polyvinyl acetal resin film; and a method of bonding the functional layer and the polyvinyl acetal resin film with an adhesive. The adhesive used in the method of bonding with an adhesive may be any adhesive that is commonly used in the art, and examples thereof include acrylate-based adhesives, urethane-based adhesives, epoxy-based adhesives, and hot melt adhesives. In an embodiment in which optically excellent properties are required, from the viewpoint of avoiding the generation of haze caused by an adhesive, a method of bonding the functional layer and the polyvinyl acetal resin film without using an adhesive is preferred.

In an embodiment in which the functional layer is a conductive layer, the ink used in the printing method usually contains conductive particles and/or conductive fibers. The conductive particles and conductive fibers are not particularly restricted, and examples thereof include: metal particles (e.g., particles of gold, silver, copper, zinc, iron, or aluminum); metal-coated particles and fibers (e.g., silver-plated glass fibers and glass spheres); and particles and fibers of conductive carbon black, carbon nanotubes, graphite, or graphene. The conductive particles may be particles of a semiconductor, such as particles of a conductive metal oxide, for example, particles of indium-doped tin oxide, indium-doped zinc oxide, or antimony-doped tin oxide. From the viewpoint of conductivity, the above-described ink preferably contains silver particles, copper particles and/or carbon nanotubes, more preferably contains silver particles or copper particles and, from the economic viewpoint, the ink particularly preferably contains copper particles.

In one preferred embodiment of the present invention, the conductive layer (conductive structure) is an etched structure of a metal foil. This embodiment is preferred from the viewpoint of its high production efficiency in providing the conductive structure as well as from the viewpoint of the ease of performing a blackening treatment. The step of bonding the metal foil and the polyvinyl acetal resin film can be carried out by, for example, any of the following methods (I) to (III):
(I) a method of superimposing and thermocompression-bonding the polyvinyl acetal resin film and the metal foil;
(II) a method of covering the metal foil with a melt of a resin material constituting the polyvinyl acetal resin film, for example, a method of melt-extruding the resin material on the metal foil, or a method of applying the resin material onto the metal foil by knife coating or the like; and
(III) a method of bonding the metal foil and the polyvinyl acetal resin film by coating either or both thereof with a solvent or a solution or dispersion of a resin material (composition) that contains a resin constituting the polyvinyl acetal resin film and a solvent, or by injecting the solvent or the solution or dispersion between the metal foil and the polyvinyl acetal resin film.

The bonding temperature for the thermocompression bonding of the metal foil and the polyvinyl acetal resin film in the above-described method (I) varies depending on the type of the resin constituting the polyvinyl acetal resin film; however, it is usually 90 to 170°C, preferably 100 to 160°C, more preferably 105 to 155°C, still more preferably 105 to 150°C. When the bonding temperature is in this range, a good bonding strength is likely to be obtained.

From the viewpoint of reducing the content of a volatile substance in the polyvinyl acetal resin film, the resin temperature during the extrusion in the above-described method (II) is preferably 150 to 250°C, more preferably 170 to 230°C.

As the solvent in the above-described method (III), it is preferred to use a plasticizer that is usually used in a polyvinyl acetal resin.

The step of forming a conductive layer of a desired shape from the thus obtained metal foil-equipped polyvinyl acetal resin film can be carried out by a known photolithography method. This step can be carried out by, for example, as described below in the section of Examples, first laminating a dry film resist on the metal foil of the metal foil-equipped polyvinyl acetal resin film, forming an etching resistance pattern by a photolithography method, subsequently immersing the polyvinyl acetal resin film thus provided with the etching resistance pattern in an etching solution to form a shape of the conductive layer, and then removing the remaining photoresist layer by a known method.

### <Laminate>

The present invention relates to a laminate comprising a transparent substrate and the polyvinyl acetal resin film or functional layer-equipped polyvinyl acetal resin film of the present invention. The present invention also relates to a laminate comprising the polyvinyl acetal resin film or functional layer-equipped polyvinyl acetal resin film of the present invention between plural transparent substrates.

From the viewpoint of transparency, weather resistance and mechanical strength, the transparent substrates are each preferably an inorganic glass (hereinafter, may be simply referred to as "glass"), or an organic glass such as a methacrylic resin sheet, a polycarbonate resin sheet, a polystyrene-based resin sheet, a polyester-based resin sheet, a polyimide-based resin sheet, or a polycycloolefin-based resin sheet, more preferably an inorganic glass, a methacrylic resin sheet or a polycarbonate resin sheet, particularly preferably an inorganic glass. Examples of the inorganic glass include, but not particularly limited to: a float glass, a tempered glass, a semi-tempered glass, a chemically tempered glass, a green glass, and a quartz glass. Further, the shape of each transparent substrate to be used is not particularly restricted, and the transparent substrate may have a simple planar shape, or may have a curvature.

In the laminate comprising the functional layer-equipped polyvinyl acetal resin film, the functional layer of the polyvinyl acetal resin film may be in contact with a transparent substrate, or may be in contact with other layer, such as the below-described plasticized polyvinyl acetal resin layer.

When the laminate comprises a conductive layer as the functional layer, each wiring of the conductive layer is usually connected to bus bars. As the bus bars, ones that are generally used in the art can be used, and examples thereof include metal foil tapes, metal foil tapes with a conductive adhesive, and conductive pastes. Further, each bus bar may be formed by leaving a portion of a metal foil, simultaneously with the formation of the conductive layer. Since the bus bars are each connected to feeder wires that are each connected to a power source, an electric current is supplied to this conductive structure.

In the present invention, the laminate may further comprise a plasticized polyvinyl acetal resin layer. The plasticized polyvinyl acetal resin layer is a layer which contains a polyvinyl acetal resin and a plasticizer. As the polyvinyl acetal resin and the plasticizer that are contained in the plasticized polyvinyl acetal resin layer, it is possible to use the same ones as those that are exemplified above and can constitute the polyvinyl acetal resin film of the present invention.

The content of the plasticizer in the plasticized polyvinyl acetal resin layer in the initial state prior to lamination of layers is preferably not less than 16.0% by mass, more preferably 16.1 to 36.0% by mass, still more preferably 22.0 to 32.0% by mass, particularly preferably 26.0 to 30.0% by mass, based on a total mass of the plasticized polyvinyl acetal resin layer. When the content of the plasticizer is in this range, a laminated glass having excellent impact resistance is likely to be obtained. As the plasticized polyvinyl acetal resin layer, a plasticized polyvinyl acetal resin layer having a sound insulation function can be used. In this case, the content of the plasticizer in the initial state prior to lamination of layers is preferably not less than 30% by mass, more preferably 30 to 50% by mass, still more preferably 31 to 40% by mass, particularly preferably 32 to 35% by mass, based on a total mass of the plasticized polyvinyl acetal resin layer.

The plasticized polyvinyl acetal resin layer may also contain, as required, an additive(s) such as those that are exemplified above and constitute the polyvinyl acetal resin film of the present invention. Further, the plasticized polyvinyl acetal resin layer can be produced by the same method as the one used for producing the polyvinyl acetal resin film of the present invention.

The thickness of the plasticized polyvinyl acetal resin layer is preferably 100 to 1,600 µm, more preferably 350 to 1,200 µm, still more preferably 700 to 900 µm. When the thickness of the plasticized polyvinyl acetal resin layer is in this range, excellent penetration resistance is likely to be obtained. The thickness is measured using, for example, a thickness gauge or a laser microscope.

When the laminate comprises the plasticized polyvinyl acetal resin layer, a difference between the amount of vinyl alcohol units of the polyvinyl acetal resin constituting the polyvinyl acetal resin film of the present invention and the amount of vinyl alcohol units of the polyvinyl acetal resin constituting the plasticized polyvinyl acetal resin layer is preferably 5% by mole or less, more preferably 3% by mole or less, particularly preferably 1% by mole or less. When the polyvinyl acetal resin constituting the polyvinyl acetal resin film of the present invention or the polyvinyl acetal resin constituting the plasticized polyvinyl acetal resin layer is composed of a mixture of plural resins, it is preferred that the average vinyl alcohol unit amount of the polyvinyl acetal resin constituting the polyvinyl acetal resin layer of the present invention and the average vinyl alcohol unit amount of the polyvinyl acetal resin constituting the plasticized polyvinyl acetal resin layer satisfy the above-described relationship. When the above-described difference is not larger than the above-described upper limit value, a difference in refractive index between the polyvinyl acetal resin film and the plasticized polyvinyl acetal resin layer in an equilibrium state after migration of the plasticizer in the laminate is small; therefore, when the plasticized polyvinyl acetal resin layer and the polyvinyl acetal resin film are used at different dimensions from each other, their boundary is hardly visible, which is preferred.

On the other hand, by increasing the difference between the amount of vinyl alcohol units of the polyvinyl acetal resin constituting the polyvinyl acetal resin film of the present invention and the amount of vinyl alcohol units of the polyvinyl acetal resin constituting the plasticized polyvinyl acetal resin layer, the plasticizer amount in the polyvinyl acetal resin film and the plasticizer amount in the plasticized polyvinyl acetal resin layer are made to be different from each other in an equilibrium state after migration of the plasticizer, whereby a laminate having excellent sound insulation performance can be obtained. In this case, the difference in the amount of vinyl alcohol units is preferably 5% by mole or larger, more preferably 8% by mole or larger.

The plasticized polyvinyl acetal resin layer may be a commercially available plasticized polyvinyl butyral sheet, a plasticized polyvinyl acetal resin layer in which nanoparticles having an infrared absorption or reflection capacity are dispersed, a colored plasticized polyvinyl acetal resin layer, or a plasticized polyvinyl acetal resin layer having a sound insulation function.

### <Method of Producing Laminate>

The laminate can be produced by a method known to those of ordinary skill in the art. For example, on a transparent substrate, the polyvinyl acetal resin film or functional layer-equipped polyvinyl acetal resin film of the present invention and, if laminated, a plasticized polyvinyl acetal resin layer are arranged in any number of layers in any order, and another transparent substrate is further arranged thereon, after which the temperature is raised as a pre-thermocompression step so as to fuse the polyvinyl acetal resin film(s) and, if laminated, the plasticized polyvinyl acetal resin layer(s) onto the transparent substrate entirely or locally, and the resultant is subsequently treated in an autoclave, whereby the laminate can be produced. Alternatively, the laminate may be produced by preliminary bonding in advance the polyvinyl acetal resin film or functional layer-equipped polyvinyl acetal resin film of the present invention and, if laminated, those layers constituting the laminate other than transparent substrates such as a plasticized polyvinyl acetal resin layer, subsequently arranging the resultant between two transparent substrates, and then fusing them with each other at a high temperature.

In this process, the surface of the polyvinyl acetal resin film of the present invention that comes into contact with a transparent substrate is preferably the surface having a higher relative diffuse reflectance at a wavelength of 550 nm. By bringing the surface having a higher relative diffuse reflectance into contact with the transparent substrate, degassing can be performed more easily at the time of bonding together the transparent substrate and the polyvinyl acetal resin film, so that foaming in the resulting laminate (laminated glass) can be inhibited.

The laminate of the present invention can be used as a laminated glass of a building or a vehicle. Therefore, the present invention also relates to a laminate which is a laminated glass for vehicles. The term "laminated glass for vehicles" used herein means a windshield glass, a rear glass, a roof glass, a side glass or the like for vehicles such as trains, trams, automobiles, ships, and aircraft.

In the present invention, when the laminate comprises a plasticized polyvinyl acetal resin layer adjacent to or in close contact with the polyvinyl acetal resin film, a plasticizer contained in the plasticized polyvinyl acetal resin layer usually migrates to a layer of the polyvinyl acetal resin film over time, and the amount of the plasticizer contained in the plasticized polyvinyl acetal resin layer becomes equal to the amount of the plasticizer contained in the layer of the polyvinyl acetal resin film. In the present invention, this average plasticizer amount is preferably 18 to 35% by mass, more preferably 20 to 30% by mass, particularly preferably 25 to 29% by mass. When the average plasticizer amount is in this range, a laminated glass having desired characteristics, such as reduction of impact on the head of a person in a vehicle upon collision, is likely to be obtained. The average plasticizer amount can be adjusted to be in the above-described range by controlling the amount of the plasticizer contained in the plasticized polyvinyl acetal resin layer, the thickness of the plasticized polyvinyl acetal resin layer, the amount of the plasticizer contained in the polyvinyl acetal resin film, and the thickness of the polyvinyl acetal resin film.

### EXAMPLES

The present invention will now be described concretely by way of Examples and Comparative Examples; however, the present invention is not restricted to the below-described Examples. In the below-described Examples, unless otherwise specified, "%" means "% by mass".

### [Example 1]

### (1) Production of Polyvinyl Acetal Resin Film

A polyvinyl butyral resin 1 having the physical properties shown in Table 1 (hereinafter, referred to as "resin 1") was melt-kneaded, extruded in the form of a strand, and then pelletized. The thus obtained pellet was melt-extruded at 230°C using a single screw extruder and a T-die. The extruded material was nipped using a metal elastic roll (roll A) and a hard rubber roll (roll B) as cooling rolls, and then wound under the below-described conditions, whereby a roll of a polyvinyl acetal resin film (1) having a smooth surface (surface 1) on the side of the metal elastic roll and an average thickness of 50 µm was obtained.

The above-described production was carried out using the apparatus shown in FIG. 1. The T-die that was used had a width of 500 mm, and the rolls A and B had a width of 600 mm. Further, both edge portions of more than 150 mm away from the center in film widthwise direction were cut by in-line slitting with a shear blade such that the resulting polyvinyl acetal resin film had a width of 300 mm, and the film was wound in the form of a roll around an ABS resin core having an inner diameter of 76 mm, an outer diameter of 88 mm and a width of 400 mm, at a winding tension of 90 N/m-width, a winding rate of 10 m/min and a winding length of 300 m.

**[Table 1]**

| Polyvinyl acetal resin | Amount of vinyl alcohol units (% by mole) | Acetalization Degree (% by mole) | Amount of vinyl acetate units (% by mole) | Viscosity of 10%-by-mass toluene/ethanol (1:1) solution (mPa·s) |
|---|---|---|---|---|
| 1 | 28.5 | 70.8 | 0.7 | 152 |
| 2 | 28.9 | 70.4 | 0.7 | 1,410 |

For the measurement of the viscosity of the polyvinyl acetal resins 1 and 2 shown in Table 1 above and mixtures thereof shown Table 2 below, the polyvinyl acetal resins 1 and 2 and the mixtures thereof having the respective ratios were each added to and dissolved in a mixed solution of toluene and ethanol (1:1) at a concentration of 10% by mass, and the viscosity of the thus obtained solution was measured using a Brookfield-type (B-type) viscometer at 20°C and 30 rpm.

### (2) Evaluation of Physical Properties/Characteristics of Polyvinyl Acetal Resin Film

For the thus obtained polyvinyl acetal resin film (1), the relative diffuse reflectance at a wavelength of 550 nm and the average surface roughness Rz were measured in accordance with the below-described respective methods, and the outer appearance was evaluated. The results thereof are shown in Table 2.

### <Measurement of Relative Diffuse Reflectance at Wavelength of 550 nm>

Using a UV-visible/near-infrared spectrophotometer (UV-3600 Plus, manufactured by Shimadzu Corporation) installed with an integrating sphere attachment (ISR603, manufactured by Shimadzu Corporation), a light was irradiated to the polyvinyl acetal resin film at an incidence angle of 0°, and the relative diffuse reflectance of the polyvinyl acetal resin film, which did not include specular reflection, was measured at a wavelength of 550 nm. The measurement was performed for a case where a surface 1 was oriented toward the light source side and directly irradiated with the light and a case where a surface 2 was oriented toward the light source side and directly irradiated with the light, and the value of the former case was defined as the relative diffuse reflectance of the surface 1 while the value of the latter case was defined as the relative diffuse reflectance of the surface 2. A barium sulfate plate was used as a standard plate. The relative diffuse reflectance is a value calculated by the following formula: Relative diffuse reflectance = (Amount of diffuse reflected light from measurement sample)/(Amount of diffuse reflected light from standard plate) × 100

### <Measurement of Average Surface Roughness of Film Surface>

In accordance with JIS B0601-2001, the average surface roughness Rz was measured for each of the polyvinyl acetal resin film surface on the roll A side (hereinafter, also referred to as "surface 1") and the polyvinyl acetal resin film surface on the roll B side (hereinafter, also referred to as "surface 2").

### <Evaluation of Outer Appearance of Film Roll>

The presence or absence of wrinkles on the surface of the polyvinyl acetal resin film roll (300 mm in width × 300 mm in length) was visually observed and evaluated based on the following criteria. The results thereof are shown in Table 2.
A: No wrinkle was observed.
B: One to less than six wrinkles were observed.
C: Six to less than ten wrinkles were observed.
D: More than ten wrinkles were observed.

### [Example 2]

A roll of a polyvinyl acetal resin film (2) was produced and evaluated in the same manner as in Example 1, except that the resin 1 was changed to a mixture of the resin 1 and the polyvinyl butyral resin 2 shown in Table 1 (hereinafter, referred to as "resin 2") (75:25, mass ratio). The results thereof are shown in Table 2.

### [Example 3]

A roll of a polyvinyl acetal resin film (3) was produced and evaluated in the same manner as in Example 2, except that the metal elastic roll used as the roll A was changed to a metal hard roll. The results thereof are shown in Table 2.

### [Example 4]

A roll of a polyvinyl acetal resin film (4) was produced and evaluated in the same manner as in Example 3, except that the mixture of the resin 1 and the resin 2 (75:25, mass ratio) was changed to a mixture of the resin 1 and the resin 2 (50:50, mass ratio). The results thereof are shown in Table 2.

### [Example 5]

A roll of a polyvinyl acetal resin film (5) was produced and evaluated in the same manner as in Example 2, except that the mixture of the resin 1 and the resin 2 (75:25, mass ratio) was changed to a mixture of [(mixture of resin 1 and resin 2 (75:25, mass ratio)):plasticizer (3GO) = 82:18 (mass ratio)]. The results thereof are shown in Table 2.

### [Example 6]

A roll of a polyvinyl acetal resin film (6) was produced and evaluated in the same manner as in Example 2, except that the average thickness of the film was changed to 125 µm. The results thereof are shown in Table 2.

### [Example 7]

A roll of a polyvinyl acetal resin film (7) was produced and evaluated in the same manner as in Example 2, except that the average thickness of the film was changed to 300 µm. The results thereof are shown in Table 2.

### [Comparative Example 1]

A roll of a polyvinyl acetal resin film (8) was produced and evaluated in the same manner as in Example 1, except that the hard rubber roll used as the roll B was changed to a metal elastic roll. The results thereof are shown in Table 2.

### [Comparative Example 2]

A roll of a polyvinyl acetal resin film (9) was produced and evaluated in the same manner as in Example 1, except that the metal elastic roll used as the roll A was changed to a hard rubber roll. The results thereof are shown in Table 2.

### [Comparative Example 3]

A roll of a polyvinyl acetal resin film (10) was produced and evaluated in the same manner as in Example 2, except that the mixture of the resin 1 and the resin 2 (75:25, mass ratio) was changed to a mixture of [(mixture of resin 1 and resin 2 (75:25, mass ratio)):plasticizer (3GO) = 78:22 (mass ratio)]. The results thereof are shown in Table 2.

**[Table 2]**

| | | Polyvinyl acetal resin film | | | | | | | | | | | | |
|---|---|---|---|---|---|---|---|---|---|---|---|---|---|---|
| | | No. | Resin 1:Resin 2 (mass ratio) | Viscosity of 10%-by-mass toluenelethanol (1:1) solution (mPa·s) | Plasticizer amount (% by mass) | Roll | | Film thickness (um) | Relative diffuse reflectance of film at wavelength of 550 nm (%) | | Absolute difference in relative diffuse reflectance (%) | Average surface roughness Rz (um) | | Outer appearance of film roll |
| | | | | | | A | B | | Surface 1 (roll A side) | Surface 2 (roll B side) | Surface 2 - Surface 1 | Surface **1** (roll A side) | Surface 2 (roll B side) | |
| Example | 1 | 1 | 100:0 | 152 | 0 | metal elastic roll | hard rubber roll | 50 | 4.1 | 5.2 | 1.1 | 1.2 | 3.6 | B |
| | 2 | 2 | 75:25 | 245 | 0 | metal elastic roll | hard rubber roll | 50 | 4.1 | 5.2 | 1.1 | 1.2 | 3.6 | B |
| | 3 | 3 | 7525 | 245 | 0 | metal hard roll | hard rubber roll | 50 | 4.7 | 6.1 | 1.4 | 0.5 | 4.9 | A |
| | 4 | 4 | 50:50 | 444 | 0 | metal hard roll | hard rubber roll | 50 | 5.4 | 6.2 | 0.8 | 0.6 | 6.2 | A |
| | 5 | 5 | 75:25 | 245 | 18 | metal elastic roll | hard rubber roll | 50 | 3.8 | 5.0 | 1.2 | 1.4 | 3.2 | B |
| | 6 | 6 | 75:25 | 245 | 0 | metal elastic roll | hard rubber roll | 125 | 4.0 | 4.9 | 0.9 | 1.3 | 3.4 | A |
| | 7 | 7 | 75:25 | 245 | 0 | metal elastic roll | hard rubber roll | 300 | 3.8 | 4.8 | 1.0 | 1.3 | 3.1 | B |
| | 8 | 2 | 75:25 | 245 | 0 | metal elastic roll | hard rubber roll | 50 | 4.1 | 5.2 | 1.1 | 1.2 | 3.6 | B |
| | 9 | 2 | 75:25 | 245 | 0 | metal elastic roll | hard rubber roll | 50 | 4.1 | 5.2 | 1.1 | 1.2 | 3.6 | B |
| | 10 | 2 | 75:25 | 245 | 0 | metal elastic roll | hard rubber roll | 50 | 4.1 | 5.2 | 1.1 | 1.2 | 3.6 | B |
| | 11 | 2 | 75:25 | 245 | 0 | metal elastic roll | hard rubber roll | 50 | 4.1 | 5.2 | 1.1 | 1.2 | 3.6 | B |
| Comparative Example | 1 | 8 | 100:0 | 152 | 0 | metal elastic roll | metal elastic roll | 50 | 1.6 | 1.6 | 0.0 | 1.2 | 1.3 | D |
| | 2 | 9 | 100:0 | 152 | 0 | hard rubber roll | hard rubber roll | 50 | 1.8 | 2.0 | 0.2 | 2.0 | 2.5 | A |
| | 3 | 10 | 75:25 | 245 | 22 | metal elastic roll | hard rubber roll | 50 | 3.9 | 4.9 | 1.0 | 1.4 | 3.1 | C |

### [Examples 1 to 7 and Comparative Examples 1 to 3]

### (3) Production of Functional Layer (Conductive Layer)-Equipped Polyvinyl Acetal Resin Films

On each of the polyvinyl acetal resin films (1) to (10) produced in Examples 1 to 7 and Comparative Examples 1 to 3, a 7 µm-thick copper foil having a blackened surface on one side was superimposed such that the blackened surface and the surface 1 of each polyvinyl acetal resin film brought into contact with each other. Next, the resultant was sandwiched by 50 µm-thick PET films from the top and the bottom, and passed between thermocompression bonding rolls set at 110°C (pressure: 0.2 MPa, speed: 0.5 m/min), after which the upper and the lower PET films were peeled off to obtain a copper foil-bonded polyvinyl acetal resin film.

Subsequently, on the copper foil of the thus obtained copper foil-bonded polyvinyl acetal resin film, a dry film resist was laminated, and an etching resistance pattern was subsequently formed by a photolithography method. Next, the copper foil-bonded polyvinyl acetal resin film, on which the etching resistance pattern had been formed as described above, was immersed in a copper etching solution to form a conductive structure, after which the remaining photoresist layer was removed by a conventional method, whereby a polyvinyl acetal resin film having a conductive layer was obtained. This polyvinyl acetal resin film having the conductive layer had no adhesive layer between the polyvinyl acetal resin film and the conductive structure (conductive layer). The conductive structure had a copper mesh structure in which copper wires having a line width of 10 µm were arranged in a grid form at intervals of 500 µm inside a 5 cm × 5 cm square and whose upper and the lower ends were each connected to a 5 mm-wide copper wire structure corresponding to a bus bar, and was thus functional as a conductive structure.

### (4) Production of Laminate (Laminated Glass)

The thus obtained polyvinyl acetal resin film having the conductive structure was cut out into a piece of 5 cm × 5 cm, and this piece was arranged on a 3 mm-thick glass having a size of 10 cm × 10 cm. In this process, the resin film was arranged such that the surface not having the conductive structure was oriented to come in contact with the glass and the conductive structure was positioned in the vicinity of the center of the glass. Next, to each of the bus bars (5 mm-wide copper wires) on the respective ends of the conductive structure, an electrode (copper foil tape with a conductive adhesive) was bonded such that each electrode end protruded from the glass. Further, on the resultant, a 0.76 mm-thick plasticized polyvinyl acetal resin layer having a size of 10 cm × 10 cm (which contained 39 parts by mass of 3GO as a plasticizer with respect to 100 parts by mass of a polyvinyl butyral resin having a vinyl alcohol unit content of 29% by mole and a viscosity-average polymerization degree of 1,700) and a 3 mm-thick glass having a size of 10 cm × 10 cm were arranged in layers.

Subsequently, the resultant was placed in a vacuum bag and decompressed at room temperature for 15 minutes using a vacuum pump. Then, the temperature was raised to 100°C while maintaining the decompression, and heating was continued in this state for 60 minutes. After the temperature was lowered, normal pressure was restored, and a prelaminated product was taken out. Thereafter, this was placed in an autoclave and treated at 140°C and 1.2 MPa for 30 minutes, whereby a laminate was produced.

### (5) Evaluation of Physical Properties/Characteristics of Laminate

For the thus obtained laminate, the conductivity, the outer appearance after a baking test, and the visibility of the conductive structure were evaluated in accordance with the following respective methods. The results thereof are shown in Table 3.

### <Evaluation of Conductivity>

The resistance between the two electrodes bonded to the bus bars was measured using a tester. The resistance value was measured before and after the production of a laminated glass, and the conductivity was evaluated based on the following criteria.
A: The conductivity was extremely good as the resistance value measured after the production of the laminated glass was within 1.5 times the resistance value measured before the production of the laminated glass.
B: The conductivity was good as the resistance value measured after the production of the laminated glass was higher than 1.5 times but within 2 times the resistance value measured before the production of the laminated glass.
C: The resistance value measured after the production of the laminated glass was higher than 2 times but within 4 times the resistance value measured before the production of the laminated glass; however, the laminated glass was practical.
D: The resistance value measured after the production of the laminated glass was higher than 4 times the resistance value measured before the production of the laminated glass, and the laminated glass was not practical.

### <Evaluation of Outer Appearance after Baking Test>

Ten of the laminated glasses obtained above in <Production of Laminate (Laminated Glass)> were left to stand in a 120°C oven for 200 hours. Thereafter, on these laminated glasses, the presence or absence of foaming in a portion excluding the region within 1 cm from the edge was visually observed in a plan view, and the state of foaming was evaluated based on the following criteria.
A: Foaming was observed in all of the ten laminated glasses.
B: Foaming was observed in one to less than three laminated glasses.
C: Foaming was observed in three to less than five laminated glasses.
D: Foaming was observed in five or more laminated glasses.

### <Sensory Evaluation of Visibility of Conductive Structure>

The laminated glass, whose blackened surface side was oriented toward an observer, was arranged at a position about 50 cm away from the observer and, when the observer looked 5 meters ahead through the glass, whether or not the copper wires of the conductive structure were visible was sensorially evaluated based on the following criteria, and the applicability of the laminated glass to the use where forward visibility is required was judged.
A: The copper wires were hardly visible, and the applicability was extremely good.
B: The copper wires were slightly visible when the focus was shifted; however, the applicability was good.
C: The copper wires were slightly visible; however, the laminated glass was practical.
D: The copper wires were visible, and the laminated glass was not practical.

### [Example 8]

A laminate was produced and evaluated in the same manner as in Example 2, except that the line width of the conductive structure was changed to 5 µm. The results thereof are shown in Table 3.

### [Example 9]

A laminate was produced and evaluated in the same manner as in Example 2, except that the line width of the conductive structure was changed to 20 µm. The results thereof are shown in Table 3.

### [Example 10]

A laminate was produced and evaluated in the same manner as in Example 2, except that the line width of the conductive structure was changed to 30 µm. The results thereof are shown in Table 3.

### [Example 11]

A laminate was produced and evaluated in the same manner as in Example 2, except that the line width of the conductive structure was changed to 40 µm. The results thereof are shown in Table 3.

**[Table 3]**

| | | Laminate | | | | |
|---|---|---|---|---|---|---|
| | | Polyvinyl acetal resin film No. | Line width of conductive structure (µm) | Conductivity | Outer appearance after baking test | Visibility of conductive structure |
| Example | 1 | 1 | 10 | C | A | A |
| | 2 | 2 | 10 | B | A | A |
| | 3 | 3 | 10 | A | B | A |
| | 4 | 4 | 10 | A | B | A |
| | 5 | 5 | 10 | A | A | A |
| | 6 | 6 | 10 | A | B | A |
| | 7 | 7 | 10 | A | C | A |
| | 8 | 2 | 5 | A | A | A |
| | 9 | 2 | 20 | A | A | B |
| | 10 | 2 | 30 | A | B | C |
| | 11 | 2 | 40 | A | C | D |
| Comparative Example | 1 | 8 | 10 | D | C | A |
| | 2 | 9 | 10 | C | D | A |
| | 3 | 10 | 10 | D | D | A |

The polyvinyl acetal resin films, in which the plasticizer amount was 0 to 20% by mass based on a total mass of each polyvinyl acetal resin film, the relative diffuse reflectance of at least one surface at a wavelength of 550 nm was 3% or higher and the absolute difference in relative diffuse reflectance at a wavelength of 550 nm between surfaces was 0.5% or larger, had a good outer appearance when wound into the form of a roll, and laminates having excellent conductivity and excellent outer appearance after the baking test were obtained from these polyvinyl acetal resin films (Examples 1 to 11). On the other hand, the polyvinyl acetal resin films which did not satisfy the requirements of the present invention (Comparative Examples 1 to 3) yielded laminates having a low conductivity and poor outer appearance after the baking test.

## Claims

1. A polyvinyl acetal resin film, comprising a polyvinyl acetal resin material,
wherein
at least one surface has a relative diffuse reflectance of 3% or higher at a wavelength of 550 nm,
an absolute difference between the relative diffuse reflectance of one surface at a wavelength of 550 nm and that of the other surface at a wavelength of 550 nm is 0.5% or larger, and
the amount of a plasticizer in the polyvinyl acetal resin film is 0 to 20% by mass based on a total mass of the polyvinyl acetal resin film.

2. The polyvinyl acetal resin film according to claim 1, wherein a viscosity of a toluene/ethanol (1:1, mass ratio) solution containing 10%-by-mass of a polyvinyl acetal resin contained in the polyvinyl acetal resin material, which is measured at 20°C and 30 rpm using a Brookfield-type (B-type) viscometer, is 100 mPa·s or higher.

3. The polyvinyl acetal resin film according to claim 1 or 2, having a thickness of 10 to 350 µm.

4. The polyvinyl acetal resin film according to any one of claims 1 to 3, wherein the amount of the polyvinyl acetal resin in the polyvinyl acetal resin film is 75% by mass or more based on the total mass of the polyvinyl acetal resin film.

5. A functional layer-equipped polyvinyl acetal resin film, comprising a functional layer on at least one surface of the polyvinyl acetal resin film according to any one of claims 1 to 4.

6. The functional layer-equipped polyvinyl acetal resin film according to claim 5, wherein the functional layer is a conductive layer.

7. The functional layer-equipped polyvinyl acetal resin film according to claim 6, wherein a material constituting the conductive layer comprises silver or copper.

8. The functional layer-equipped polyvinyl acetal resin film according to claim 6 or 7, wherein the conductive layer comprises plural linear conductive materials having a line width of 1 to 30 µm.

9. A method of producing the functional layer-equipped polyvinyl acetal resin film according to any one of claims 5 to 8, the method comprising coating, printing, or laminating a material constituting the functional layer on at least one surface of the polyvinyl acetal resin film.

10. A laminate, comprising:
a transparent substrate; and
the polyvinyl acetal resin film according to any one of claims 1 to 4, or the functional layer-equipped polyvinyl acetal resin film according to any one of claims 5 to 8.

11. A laminate, comprising the polyvinyl acetal resin film according to any one of claims 1 to 4, or the functional layer-equipped polyvinyl acetal resin film according to any one of claims 5 to 8, between plural transparent substrates.

12. The laminate according to claim 10 or 11, further comprising a plasticized polyvinyl acetal resin layer.

13. The laminate according to any one of claims 10 to 12, wherein the transparent substrate is a glass.

14. A glass for a vehicle, comprising the laminate according to any one of claims 10 to 13.

## Patentansprüche

1. Polyvinylacetalharzfolie, umfassend ein Polyvinylacetalharzmaterial,
wobei
mindestens eine Oberfläche eine relative diffuse Reflexion von 3% oder mehr bei einer Wellenlänge von 550 nm aufweist,
eine absolute Differenz zwischen der relativen diffusen Reflexion einer Oberfläche bei einer Wellenlänge von 550 nm und jener der anderen Oberfläche bei einer Wellenlänge von 550 nm 0,5% oder mehr beträgt, und
die Menge eines Weichmachers in der Polyvinylacetalharzfolie 0 bis 20 Massen%, bezogen auf eine Gesamtmasse der Polyvinylacetalharzfolie, beträgt.

2. Polyvinylacetalharzfolie nach Anspruch 1, wobei eine Viskosität einer Toluol/Ethanol-Lösung (Masseverhältnis 1:1), die 10 Massen% einer Polyvinylacetalharzes, welches in dem Polyvinylacetalharzmaterial enthalten ist, enthält, eine Viskosität von 100 mPa·s oder mehr aufweist, welche bei 20°C und 30 U/min unter Verwendung eines Brookfield-Viskosimeters (Typ B) gemessen ist.

3. Polyvinylacetalharzfolie nach Anspruch 1 oder 2, die eine Dicke von 10 bis 350 µm aufweist.

4. Polyvinylacetalharzfilm nach einem der Ansprüche 1 bis 3, wobei die Menge des Polyvinylacetalharzes in dem Polyvinylacetalharzfilm 75 Massen% oder mehr, bezogen auf die Gesamtmasse des Polyvinylacetalharzfilms, beträgt.

5. Funktionsschicht-ausgestattete Polyvinylacetalharzfolie, umfassend eine Funktionsschicht auf mindestens einer Oberfläche der Polyvinylacetalharzfolie nach einem der Ansprüche 1 bis 4.

6. Funktionsschicht-ausgestattete Polyvinylacetalharzfolie nach Anspruch 5, wobei die Funktionsschicht eine leitfähige Schicht ist.

7. Funktionsschicht-ausgestattete Polyvinylacetalharzfolie nach Anspruch 6, wobei ein Material, das die leitfähige Schicht bildet, Silber oder Kupfer umfasst.

8. Funktionsschicht-ausgestattete Polyvinylacetalharzfolie nach Anspruch 6 oder 7, wobei die leitfähige Schicht mehrere lineare leitfähige Materialien mit einer Linienbreite von 1 bis 30 µm umfasst.

9. Verfahren zur Herstellung der Funktionsschichtausgestatteten Polyvinylacetalharzfolie nach einem der Ansprüche 5 bis 8, wobei das Verfahren das Beschichten, Bedrucken oder Laminieren eines Materials, das die Funktionsschicht bildet, auf mindestens eine Oberfläche der Polyvinylacetalharzfolie umfasst.

10. Laminat, umfassend:
ein transparentes Substrat; und
die Polyvinylacetalharzfolie nach einem der Ansprüche 1 bis 4 oder die Funktionsschicht-ausgestattete Polyvinylacetalharzfolie nach einem der Ansprüche 5 bis 8.

11. Laminat, umfassend die Polyvinylacetalharzfolie nach einem der Ansprüche 1 bis 4 oder die Funktionsschicht-ausgestattete Polyvinylacetalharzfolie nach einem der Ansprüche 5 bis 8 zwischen mehreren transparenten Substraten.

12. Laminat nach Anspruch 10 oder 11, weiter umfassend eine plastifizierte Polyvinylacetalharzschicht.

13. Laminat nach einem der Ansprüche 10 bis 12, wobei das transparente Substrat ein Glas ist.

14. Glas für ein Fahrzeug, umfassend das Laminat nach einem der Ansprüche 10 bis 13.

## Revendications

1. Film en résine acétal polyvinyle, comprenant une matière résineuse en acétal polyvinyle,
dans lequel
au moins une surface présente une réflectance diffuse relative de 3% ou plus à une longueur d'onde de 550 nm,
une différence absolue entre la réflectance diffuse relative d'une surface à une longueur d'onde de 550 nm et celle de l'autre surface à une longueur d'onde de 550 nm est 0,5% ou supérieure, et
la quantité d'un plastifiant dans le film de résine acétal polyvinyle va de 0 à 20% en masse sur base de la masse totale du film de résine acétal polyvinyle.

2. Film de résine acétal polyvinyle selon la revendication 1, dans lequel la viscosité d'une solution de toluène/éthanol (1:1, masse volumique) contenant 10% en masse d'une résine acétal polyvinyle contenue dans la matière résineuse acétal polyvinyle, laquelle est mesurée à 20°C et 30 tr/m en utilisant un viscosimètre de type Brookfield (type B), est de 100 mPa·s ou plus.

3. Film de résine acétal polyvinyle selon la revendication 1 ou 2, présentant une épaisseur allant de 10 à 350 µm.

4. Film de résine acétal polyvinyle selon l'une quelconque des revendications 1 à 3, dans lequel la quantité de la résine acétal polyvinyle dans le film de résine acétal polyvinyle est de 75% en masse ou plus, sur base de la masse totale du film de résine acétal polyvinyle.

5. Film de résine acétal polyvinyle équipé d'une couche fonctionnelle, comprenant une couche fonctionnelle sur au moins une surface du film de résine acétal polyvinyle selon l'une quelconque des revendications 1 à 4.

6. Film de résine acétal polyvinyle équipé d'une couche fonctionnelle selon la revendication 5, dans lequel la couche fonctionnelle est une couche conductrice.

7. Film de résine acétal polyvinyle équipé d'une couche fonctionnelle selon la revendication 6, dans lequel une matière constituant la couche conductrice comprend de l'argent ou du cuivre.

8. Film de résine acétal polyvinyle équipé d'une couche fonctionnelle selon la revendication 6 ou 7, dans lequel la couche conductrice comprend une pluralité de matières conductrices linéaires présentant une largeur de ligne de 1 à 30 µm.

9. Procédé de production du film de résine acétal polyvinyle équipé d'une couche fonctionnelle selon l'une quelconque des revendications 5 à 8, le procédé comprenant le revêtement, l'impression ou le laminage d'une matière constituant la couche fonctionnelle sur au moins une surface du film de résine acétal polyvinyle.

10. Laminé, comprenant :
un substrat transparent ; et
le film de résine acétal polyvinyle selon l'une quelconque des revendications 1 à 4, ou le film de résine acétal polyvinyle équipé d'une couche fonctionnelle selon l'une quelconque des revendications 5 à 8.

11. Laminé, comprenant le film de résine acétal polyvinyle selon l'une quelconque des revendications 1 à 4, ou le film de résine acétal polyvinyle équipé d'une couche fonctionnelle selon l'une quelconque des revendications 5 à 8, entre une pluralité de substrats transparents.

12. Laminé selon la revendication 10 ou 11, comprenant en outre une couche de résine acétal polyvinyle plastifiée.

13. Laminé selon l'une quelconque des revendications 10 à 12, dans lequel le substrat transparent est un verre.

14. Verre pour véhicule, comprenant le laminé selon l'une quelconque des revendications 10 à 13.
